# EUROPÄISCHE PATENTSCHRIFT

(11) **EP 1 554 138 B1**
(45) Veröffentlichungstag und Bekanntmachung des Hinweises auf die Patenterteilung: **20.08.2008**
(21) Anmeldenummer: 03809271.4
(22) Anmeldetag: 08.10.2003
(51) Int. Cl.: B60G 21/055

(54) **WANKSTABILISATOR FÜR DAS FAHRWERK EINES KRAFTFAHRZEUGS**
ROLL STABILISER FOR THE CHASSIS OF A MOTOR VEHICLE
STABILISATEUR ANTI-VACILLEMENT DESTINE AU CHASSIS D'UN VEHICULE AUTOMOBILE

(30) Priorität: 25.10.2002 DE 10250068
(43) Veröffentlichungstag der Anmeldung: 20.07.2005
(73) Patentinhaber: Schaeffler KG, 91074 Herzogenaurach (DE)
(72) Erfinder: OSTERLÄNGER, Jürgen, 91448 Emskirchen (DE); KRAUS, Manfred, 91074 Herzogenaurach (DE)
(86) Internationale Anmeldenummer: PCT/EP2003/011115
(87) Internationale Veröffentlichungsnummer: WO 2004/037573

(56) Entgegenhaltungen:
- DE-A- 10 205 932
- DE-A- 19 613 769
- DE-A- 19 646 500
- FR-A- 2 670 716
- GB-A- 2 220 625
- US-A1- 2002 121 748

## Beschreibung

### Gebiet der Erfindung

Die vorliegende Erfindung betrifft einen Wankstabilisator für das Fahrwerk eines Kraftfahrzeugs. Diese Stabilisatoren haben die Aufgabe die Wankneigung des Aufbaus bei Kurvenfahrt zu verringern und das Kurvenverhalten zu beeinflussen, also die Fahrsicherheit zu erhöhen. Im Regelfall bleibt bei gleichseitiger Federung der Stabilisator wirkungslos. Ein gattungsgemäßen Wanhstabilisator ist aus der WO 99/67100 A bekannt.

Aus DE 100 02 455 A1 ist daneken ein Wankstabilisator bekannt geworden, dessen Aktuator zwei Aktuatorteile umfasst, die jeweils an einer Stabilisatorhälfte drehfest angeschlossen sind. Über einen Stellantrieb und ein nachgeschaltetes Getriebe kann eine Verdrehung der beiden Aktuatorteile um die Drehachse des Aktuators erfolgen, um die Stabilisatorhälften gegeneinander zu verdrehen. Bei dem bekannten Wankstabilisator bilden die beiden Aktuatorteile Kurvenbahnträger, die mit Kurvenbahnen als Teil eines Kurvenbahngetriebes versehen sind. Es können elektromechanische, aber auch hydraulische Stellantriebe vorgesehen sein. Unter Betätigung der Stellantriebe werden Stellmomente erzeugt, die einem Wankmoment entgegenwirken, so dass die Fahrsicherheit verbessert ist.

Aufgabe der vorliegenden Erfindung ist es, einen Wankstabilisator nach den Merkmalen des Oberbegriffs des Anspruchs 1 anzugeben, bei dem die Fail-Sale, Einrichtung auf besonders einfache weise realisiert ist.

Erfindungsgemäß wird diese Aufgabe dadurch gelöst, dass der Aktuator mit einer Failsafe-Einrichtung versehen ist, die bedarfsweise die beiden Stabilisatorhälften drehfest miteinander verbindet. Die Failsafe-Einrichtung kann aktiviert werden, wenn beispielsweise der Aktuator überlastet ist oder ausfällt. Im Falle eines Ausfalls ist eine unkontrollierte Verdrehung der beiden Stabilisatorhälften zueinander mittels der Failsafe-Einrichtung verhindert. Demzufolge ist mit dem erfindungsgemäßen Wankstabilisator eine Verbesserung der Fahrsicherheit erreicht.

Die Failsafe-Einrichtung ist zwischen zwei Aktuatorteilen des Aktuators wirksam angeordnet, die an die beiden Stabilisatorhälften drehfest angeschlossen sind. Üblicherweise wirkt der Stellantrieb zwischen diesen Aktuatorteilen. Bei erfindungsgemäßen Wankstabilisatoren können die Aktuatorteile ebenso wie bei dem bekannten Wankstabilisator als Kurvenbahnträger ausgebildet sein, die Teil eines Kurvenbahngetriebes sind, um die Aktuatorteile gegeneinander zu verdrehen. In vorteilhafter Weise können diese beiden Aktuatorteile zugleich für die Verdrehsicherung im Failsafemodus verwendet werden. Als Failsafe-Einrichtung kann beispielsweise ein Verriegelungsmechanismus vorgesehen sein. Vorzugsweise umfasst dieser Verriegelungsmechanismus einen Sperriegel, der in einer passiven Lage außer Eingriff mit den beiden Aktuatorteilen und in einer aktiven Lage in Eingriff mit den beiden Aktuatorteilen ist. Auf einfache Art und Weise können an einem der beiden Aktuatorteile oder aber auch an beiden Aktuatorteilen Rasten zum Eingriff für den Sperriegel ausgebildet sein. Wenn beispielsweise der aus DE 100 02 455 A1 bekannte Wankstabilisator zugrunde gelegt wird, bilden die beiden dort beschriebenen Kurvenbahnträger die Aktuatorteile. Diese Aktuatorteile können dann auf einfache Art und Weise sowohl mit den Kurvenbahnen, als auch mit den Rasten für den Eingriff des Sperriegels versehen sein.

Der Sperriegel ist seiner passiven Lage von einer elektromagnetischen Kraft gehalten. In praktischer Ausgestaltung der Erfindung kann ein Elektromagnet vorgesehen sein, der im Betrieb des Wankstabilisators stromdurchflossen ist und dabei eine elektromagnetische Kraft auf den Sperriegel ausübt, die gegen einer Federkraft arbeitet, die den Sperriegel aus seiner passiven Lage heraus und in seine aktive Lage hineinfedern will. Wenn nun beispielsweise eine elektrische Verbindung zum Wankstabilisator unterbrochen ist, fällt der Stellantrieb aus, aber auch die elektromagnetische Kraft bricht zusammen. Nach Wegfall dieser Kraft kann der Sperriegel nun aus seiner passiven Lage mittels der Federkraft eines vorgespannten Federspeichers oder mittels Fliehkraft in seine aktive Lage hinein gefedert werden. Wenn beispielsweise der Verriegelungsmechanismus an einem der beiden Aktuatorteile befestigt ist und das andere Aktuatorteil gegenüber dem einen Aktuatorteil verdreht, kann eine an dem anderen Aktuatorteil ausgebildete Raste so angeordnet sein, dass bei einem bestimmten Verdrehwinkel der Sperriegel mit dieser Raste fluchtet und schließlich in diese Raste eingreift. Nun ist eine formschlüssige Verbindung zwischen diesen beiden Aktuatorteilen gewährleistet, und somit auch eine Verdrehung der beiden Stabilisatorhälften gegeneinander ausgeschlossen.

Failsafe-Einrichtungen gemäß dieser Erfindung lassen sich in besonders günstiger Weise in Wankstabilisatoren integrieren, bei dem der Aktuator zwei ineinander angeordnete Aktuatorteile aufweist, die um eine gemeinsame Drehachse relativ zueinander drehbar sind, wobei der Sperriegel quer zur Drehachse angeordnet und aus seiner passiven Lage in seine aktive Lage unter Verlagerung quer zur Drehachse bringbar ist. Die Verriegelung findet an einem von der Drehachse entfernten Punkt des Wankstabilisators statt so dass aufgrund des vergrößerten Hebelarms die zwischen dem Riegel und der Raste wirkenden Kräfte reduziert und in Umfangsrichtung sicher übertragen werden.

Nachstehend wird die Erfindung anhand eines in drei Figuren dargestellten Ausführungsbeispiels näher erläutert. Es zeigen:
- Figur 1: einen erfindungsgemäßen Wankstabilisator in perspektivischer Darstellung,
- Figur 2: den erfindungsgemäßen Wankstabilisator im Längsschnitt und
- Figur 3: einen Ausschnitt der Figur 2 in einem weiteren Längsschnitt.

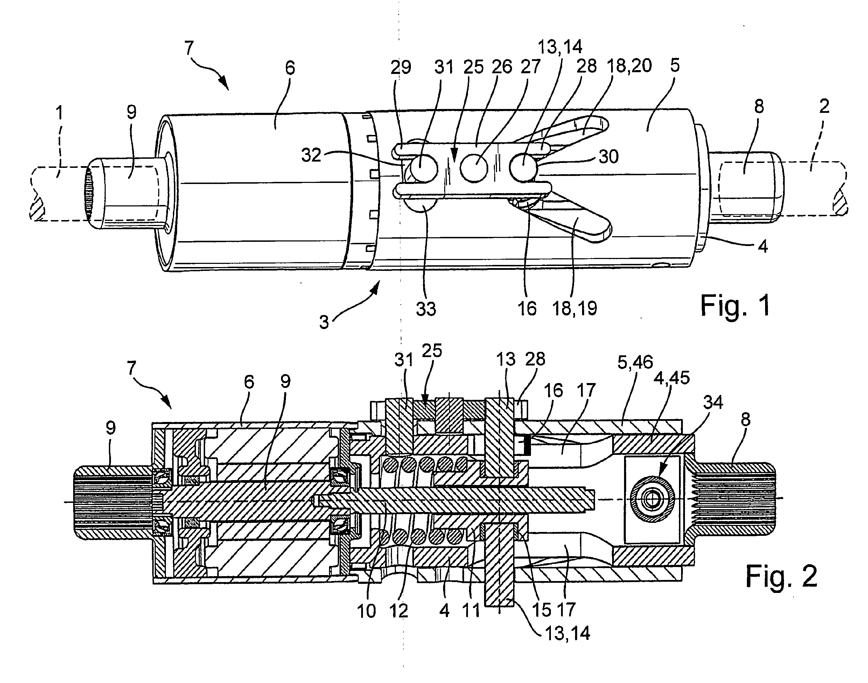

Der in den Figuren 1 bis 3 dargestellte erfindungsgemäßen Wankstabilisator für das Fahrwerk eines Kraftfahrzeuges umfasst Stabilisatorhälften 1, 2, die hier nur gestrichelt dargestellt sind. Zwischen den Stabilisatorhälften 1, 2 ist ein Aktuator 3 angeordnet. der Aktuator 3 verdreht bedarfsweise die beiden Stabilisatorhälften 1, 2 um die Drehachse des Aktuators 3 zueinander.

Der Aktuator 3 weist zwei koaxial ineinander angeordnete Kurvenbahnträger 4, 5 auf. Die beiden Kurvenbahnträger 4, 5 sind rohrförmig ausgebildet und relativ zueinander drehbar. Der äußere Kurvenbahnträger 5 ist mit seinem in der Figur 2 linksseitigen Ende an einem Gehäuse 6 eines Elektromotors 7 befestigt. Der Kurvenbahnträger 4 und das Gehäuse 6 weisen an ihren einander abgewandten stirnseitigen Enden jeweils eine Zapfenaufnahme 8, 9 zur drehfesten Aufnahme der Enden der Stabilisatorhälften 1, 2 auf. Die Kurvenbahnträger 4, 5 bilden gegeneinander um eine Drehachse verdrehbare Aktuatorteile 45, 46.

An einem Rotor 9a des Elektromotors 7 ist eine Gewindespindel 10 befestigt. Die Gewindespindel 10 ist koaxial zu den beiden Kurvenbahnträgern 4, 5 angeordnet. Auf der Gewindespindel 10 ist eine Spindelmutter 11 nach Art eines an sich bekannten Kugelgewindetriebes drehbar angeordnet eine Relativdrehung zwischen der Gewindespindel 10 und der Spindelmutter 11 wird in eine axiale Bewegung der Spindelmutter 11 gegenüber den Kurvenbahnträgern 4, 5 umgewandelt.

Eine koaxial auf der Gewindespindel 10 angeordnete Schraubendruckfeder 12 ist einerseits an dem Kurvenbahnträger 4 abgestützt und andererseits gegen die Spindelmutter 11 angefedert. Die Spindelmutter 11 trägt ein Koppelelement 13, das für eine Verdrehung der beiden Kurvenbahnträger 4, 5 zueinander erforderlich ist, wie weiter unten ausgeführt wird. Das Koppelelement 13 umfasst mehrere über den Umfang der Spindelmutter 11 verteilt angeordnete Stellzapfen 14, die sternförmig um die Drehachse des Aktuators 3 herum angeordnet sind. Die Stellzapfen 14 sind in Radiallagern 15 um ihre Längsachse herum drehbar an der Spindelmutter 11 aufgenommen. Auf den Stellzapfen 14 sind Stützrollen 16 drehbar gelagert.

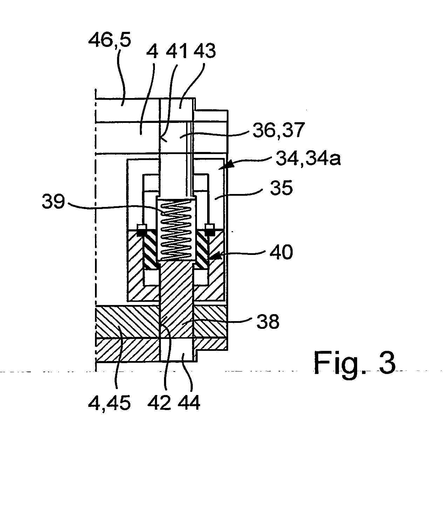

Der Kurvenbahnträger 4ist an mehren über den Umfang verteilt angeordneten Stellen mit parallel zur Drehachse des Aktuators 3 angeordneten geradlinigen Kurvenbahnen 17 versehen. Der Kurvenbahnträger 5 ist an mehreren über seinen Umfang verteilt angeordneten Stellen jeweils mit einer V-förmigen Kurvenbahn 18 versehen, deren etwa V-förmig zueinander angeordneten Kurvenbahnschenkel 19, 20 spiegelsymmetrisch zu einer die Drehachse des Aktuators 3 enthaltenden Längsmittelebene angeordnet sind. Die V-förmige Kurvenbahn 18 bzw. deren Kurvenbahnschenkel 19, 20 sind deutlich den Figuren 1 und 3 zu entnehmen. Die Koppelelemente 13 koppeln die beiden Kurvenbahnträger 4, 5 miteinander. Zu diesem Zweck greifen die Stellzapfen 14 jeweils sowohl in die Kurvenbahn 17 als auch in die V-förmige Kurvenbahn 18 ein. Die Stützrollen 16 arbeiten mit der Kurvenbahn 17 zusammen, während die Stellzapfen 14 jeweils mit deren Umfang mit der V-förmigen Kurvenbahn 18 zusammenarbeitet. Die beiden Kurvenbahnschenkel 19, 20 jeder V-förmigen Kurvenbahn 18 schneiden sich in einer in der Längsmittelebene enthaltenen Schnittstelle 21 wie dies in der Figur 3 angedeutet ist. In einer Neutralstellung des Aktuators 3 ist das Koppelelement 14, dass heißt der Stellzapfen 14 in der Schnittstelle 21 angeordnet für eine einwandfreie Positionierung des Stellzapfens 14 ist vorliegend an der inneren Wandung 22 der V-förmige Kurvenbahn 18 eine Halteposition 23 ausgebildet. Diese Halteposition 23 für das Koppelelement 13, dass heißt hier den Stellzapfen 14, ist quer zur der Drehachse des Aktuators 3 angeordnet und bildet ein Plateau 24.

Bei der vorliegenden Erfindung ist ein elektromechanischer Stellantrieb vorgesehen, der den bereits beschriebenen Elektromotor 7 mit dem angeschlossenen Kugelgewindetrieb beinhaltet. Wenn einem Wanken des Fahrzeugaufbaus entgegengewirkt werden soll, werden bei aktiven Wankstabilisatoren die beiden Stabilisatorenhälften entgegen dem wirksamen Wankmoment verdreht. Diese Verdrehung wird vorliegend dadurch erreicht, dass unter Betätigung des Elektromotors 7 die Spindelmutter 11 axial verlagert wird, wobei die jeweils in einer der beiden Kurvenbahnschenkel 19, 20 angeordneten Stellzapfen 14 entlang dieser Kurvenbahnschenkel 19, 20 verlagert werden. Das bedeutet, dass der äußere Kurvenbahnträger 5 gegenüber den Stellzapfen 14 und gegenüber dem Kurvenbahnträger 4 verdreht. Wenn der Stellzapfen 14 in dem Kurvenbahnschenkel 19 angeordnet ist, erfolgt eine Relativdrehung entgegen dem Uhrzeigersinn. Wenn der Stellzapfen 14 in dem Kurvenbahnschenkel 20 angeordnet ist, erfolgt eine Relativdrehung mit dem Uhrzeigersinn.

Je nach der Orientierung des anliegenden Wankmoments muss gewählt werden, in welchen der beiden Kurvenbahnschenkel 19, 20 der Stellzapfen 14 ausgehend von seiner Neutralposition in der Schnittstelle 21 gelenkt werden soll. Zu diesem Zweck ist gemäß den Figuren 1 und 2 eine Steuerung 25 vorgesehen, mittels der das Koppelelement 13 wahlweise aus der Neutralstellung heraus in einen der beiden Kurvenbahnschenkel 19, 20 eingelenkt werden kann. Diese Steuerung 25 umfasst eine Wippe 26, die um eine Wippenachse 27 schwenkt. Die Wippenachse 27 ist quer zu der Drehachse des Aktuators 3 angeordnet. das eine Wippenende 28 greift an dem Koppelelement 13 und das andere Wippenende 29 greift an dem anderen Kurvenbahnträger 4 an. Im vorliegenden Ausführungsbeispiel greift der Stellzapfen 14 in eine U-förmige Aufnahme 30 der Wippe 26 an deren Wippenende 28 ein. An dem anderen Wippenende 29 greifen Zapfen 31 jeweils in eine U-förmige Aufnahme 32 am anderen Wippenende 29 ein. Die Wippenachse 27 ist an dem Kurvenbahnträger 5 befestigt.

Diese Steuerung 25 kann in vorteilhafter Weise das Wankmoment nutzen, um das Koppelelement 13 in den entsprechenden Kurvenbahnschenkel 19, 20 der V-förmigen Kurvenbahn einzulenken. Wenn beispielsweise unter einem Wankmoment eine Relativdrehung zwischen den beiden Stabilisatorhälften 1, 2 im Uhrzeigersinn eingeleitet wird, verschwenkt der Zapfen 31 ebenfalls im Uhr- . zeigersinn und bewegt sich in Umfangsrichtung gegenüber den Kurvenbahnträger 5. Diese Relativdrehung gegenüber dem Kurvenbahnträger 5 ist möglich, weil in dem Kurvenbahnträger 5 in Umfangsrichtung ausgebildete Nuten 33 ausgebildet sind, durch die der Zapfen 31 hindurch greift. Die Wippe 26 schwenkt mit ihrem Wippenende 29 nun ebenfalls im Uhrzeigersinn bzw. nach oben, wenn man Figur 1 zugrundelegt. Die Wippe 26 schwenkt nun mit ihrem Wipppenende 28 entgegen dem Uhrzeigersinn, also nach unten wenn man Figur 1 zugrundelegt. Unter dieser Schwenkbewegung des Wippenendes 28 wird der Stellzapfen 14 von seiner Halteposition 23 weg und in den Kurvenbahnabschnitt 19 hinein verlagert. Die Schraubenfeder 12 drückt nun die Spindelmutter 11 axial nach rechts. Diese Bewegung wird unterstützt durch die Betätigung des Elektromotors 7, der die Gewindespindel 10 antreibt. Je weiter das Koppelelement 13 nach rechts verlagert wird, desto größer ist demzufolge die Verdrehung zwischen den beiden Kurvenbahnträgern 4, 5, so dass dem Wankmoment aktiv entgegengewirkt wird.

Die Schraubenfeder 12 umfasst den Elektromotor 7. In der Startphase des Elektromotors 7 unterstützt die vorgespannte Schraubenfeder 12 mit ihrer vollen Vorspannkraft den gewünschten Stellvorgang. Über eine geeignete Regelung kann nun der Motor 7 derart angesteuert werden, dass nach dem Wegfall des Wankmoments das Koppelelement 13 wieder in seiner Neutralstellung angeordnet ist, wobei dann die Schraubendruckfeder 12 wieder ihre volle Vorspannkraft erreicht hat.

Um im Falle eines Stromausfalls ein unkontrolliertes Verdrehen der beiden Stabilisatorhälften 1, 2 zueinander zu verhindern sieht die Erfindung eine Failsafe-Einrichtung 34 vor, die in einer derartigen Notsituation die beiden Stabilisatorhälften 1, 2 drehfest miteinander verbindet. Eine derartige Failsafe-Einrichtung 34 ist selbstverständlich unabhängig von einer bestimmten Ausbildung des Stellantriebs oder des Getriebes. Die Failsafe-Einrichtung 34 ist auch unabhängig von der in diesem Ausführungsbeispiel beschriebenen Schraubenfeder 12.

Figur 3 zeigt eine Ausschnittsvergrößerung des erfindungsgemäßen Wankstabilisators gemäß den Figuren 1 und 2. Im Inneren des rohrförmig ausgebildeten Kurvenbahnträgers 4 ist die Failsafe-Einrichtung 34 angeordnet, die vorligend durch einen Verriegelungsmechanismus 34a gebildet ist. Diese umfasst ein Gehäuse 35 und einen darin längsverschieblich angeordneten, zweiteiligen Sperriegel 36. Zwischen den Sperriegelteilen 37, 38 ist eine Schraubendruckfeder 39 koaxial zum Sperriegel 36 angeordnet. Der Sperriegel 36 ist quer zur Drehachse des Aktuators 3 angeordnet. Lediglich angedeutet ist ein stromdurchflossener Elektromagnet 40, der die beiden Sperriegelteile 37, 38 unter Komprimierung der Schraubendruckfeder 39 in einer eingerückten Position der Failsafe-Einrichtung 34 hält. Die beiden Sperriegelteile 37, 38 greifen in Bohrungen 41, 42 des inneren Kurvenbahnträgers 4 oder Aktuatorteil 45 ein. Der äußere Kurvenbahnträger 5 oder Aktuatorteil 46 weist korrespondierende Rasten 43, 44 auf, die in einer bestimmten Drehstellung der Kurvenbahnträger 4, 5 mit den Bohrungen 41, 42 fluchten. Es können eine Vielzahl von Rasten 43, 44 über den Umfang verteilt hintereinander angeordnet sein, um im FailsafeModus möglichst rasch ohne große Verdrehwinkel ein Verrasten der Aktuatorteile 45, 46 erfolgt.

Beispielsweise in Folge eines Stromausfalls kann der Elektromotor eine definierte Drehlage der Stabilisatorhälften 1, 2 zueinander nicht länger aufrechthalten. Ebenso bricht die Stromversorgung für den Elektromagneten 40 zusammen. In dieser Situation fällt die elektromagnetische Kraft weg, die den Sperriegel 36 entgegen der Federkraft der Schraubendruckfeder 39 in seiner eingerückten Position hält. Unter der Kraft der vorgespannten Schraubendruckfeder 39 drücken nun die Sperriegelteile 37, 38 radial nach außen und verlassen somit ihre passive Lage. Sobald die Bohrungen 41, 42 des inneren Kurvenbahnträgers 4 mit den korrespondierenden Rasten 43, 44 des äußeren Kurvenbahnträgers 5 fluchten schieben sich die Sperriegelteile 37, 38 in diese Rasten 43, 44 hinein, so dass die beiden Kurvenbahnträger 4, 5 drehfest miteinander verbunden sind. In dieser Situation haben die Sperriegelteile 37, 38 ihre aktive Lage eingenommen. Demzufolge sind nun auch die Stabilisatorhälften 1, 2 des Wankstabilisators drehfest miteinander verbunden.

### Positionszahlenliste

- 1: Stabilisatorhälfte
- 2: Stabilisatorhälfte
- 3: Aktuator
- 4: Kurvenbahnträger
- 5: Kurvenbahnträger
- 6: Gehäsue
- 7: Elektromotor
- 8: Zapfenaufnahme
- 9: Zapfenaufnahme
- 9a: Rotor
- 10: Gewindespindel
- 11: Spindelmutter
- 12: Schraubenfeder
- 13: Koppelelement
- 14: Stellzapfen
- 15: Radiallager
- 16: Stützrolle
- 17: Kurvenbahn
- 18: V-förmige Kurvenbahn
- 19: Kurvenbahnschenkel
- 20: Kurvenbahnschenkel
- 21: Schnittstelle
- 22: innere Wandung
- 23: Halteposition
- 24: Plateau
- 25: Steuerung
- 26: Wippe
- 27: Wippachse
- 28: Wippenende
- 29: Wippenende
- 30: Aufnahme
- 31: Zapfen
- 32: Aufnahme
- 33: Nut
- 34: Failsafe-Einrichtung
- 34a: Verriegelungsmechanismus
- 35: Gehäuse
- 36: Sperriegel
- 37: Sperriegelteil
- 38: Sperriegelteil
- 39: Schraubendruckfeder
- 40: Elektromagnet
- 41: Bohrung
- 42: Bohrung
- 43: Raste
- 44: Raste
- 45: Aktuatorteil
- 46: Aktuatorteil

## Patentansprüche

1. Wankstabilisator für das Fahrwerk eines Kraftfahrzeuges, mit einem zwischen Stabilisatorhälften (1, 2) angeordneten und diese bedarfsweise gegeneinander um eine Drehachse verdrehenden Aktuator (3), wobei der Aktuator (3) mit einer Failsafe-Einrichtung (34) versehen ist, die bedarfsweise die beiden Stabilisatorhälften (1, 2) drehfest miteinander verbindet, und wobei ein Aktuatorteil (46) an der einen Stabilisatorhälfte (1) und ein weiteres Aktuatorteil (45) an der anderen Stabilisatorhälfte (2) drehfest angeschlossen ist, wobei die Failsafe-Einrichtung (34) zwischen den beiden Aktuatorteilen (45, 46) wirksam angeordnet ist, **dadurch gekennzeichnet, dass** die Failsafe-Einrichtung (34) einen Verriegelungsmechanismus (34a) aufweist, der im Failsafemodus die beiden Aktuatorteile (45, 46) miteinander drehfest verriegelt, wobei der Verriegelungsmechanismus (34a) einen Sperrriegel (36) aufweist, der in einer passiven Lage außer Eingriff mit den beiden Aktuatorteilen (45, 46) und in einer aktiven Lage in Eingriff mit den beiden Aktuatorteilen (45, 46) ist, wobei der Sperrriegel (36) in seiner passiven Lage von einer elektromagnetischen Kraft gehalten ist.

2. Wankstabilisator nach Anspruch 1, bei dem wenigstens einer der beiden Aktuatorteile (46) mit einer Raste (43, 44) zum Eingriff für den Sperrriegel (36) versehen ist.

3. Wankstabilisator nach Anspruch 1, bei dem der Sperrriegel (36) aus seiner passiven Lage mittels Federkraft eines vorgespannten Federspeichers (39) in seine aktive Lage hineinfederbar ist.

4. Wankstabilisator nach Anspruch 1, bei dem der Aktuator (3) zwei ineinander angeordnete Aktuatorteile (45, 46) aufweist, die um eine gemeinsame Drehachse relativ zueinander drehbar sind, wobei der Sperrriegel (36) quer zur Drehachse angeordnet und aus seiner passiven Lage in seine aktive Lage unter Verlagerung quer zur Drehachse bringbar ist.

## Claims

1. Roll stabilizer for the chassis of a motor vehicle, with an actuator (3) which is arranged between stabilizer halves (1, 2) and rotates them, when required, in relation to each other about an axis of rotation, wherein the actuator (3) is provided with a failsafe device (34) which, when required, connects the two stabilizer halves (1, 2) to each other in a rotationally fixed manner, and wherein one actuator part (46) is connected in a rotationally fixed manner to the one stabilizer half (1) and a further actuator part (45) is connected in a rotationally fixed manner to the other stabilizer half (2), and wherein the failsafe device (34) is arranged effectively between the two actuator parts (45, 46), **characterized in that** the failsafe device (34) has a locking mechanism (34a) which, in the failsafe mode, locks the two actuator parts (45, 46) to each other in a rotationally fixed manner, with the locking mechanism (34a) having a locking bolt (36) which, in a passive position, is not in engagement with the two actuator parts (45, 46) and, in an active position, is in engagement with the two actuator parts (45, 46), and with the locking bolt (36) being held in its passive position by an electromagnetic force.

2. Roll stabilizer according to Claim 1, in which at least one of the two actuator parts (46) is provided with a catch (43, 44) for the engagement of the locking bolt (36).

3. Roll stabilizer according to Claim 1, in which the locking bolt (36) can be sprung out of its passive position into its active position by means of spring force of a prestressed spring accumulator (39).

4. Roll stabilizer according to Claim 1, in which the actuator (3) has two actuator parts (45, 46) which are arranged one inside the other and are rotatable relative to each other about a common axis of rotation, with the locking bolt (36) being arranged transversely with respect to the axis of rotation and being able to be brought from its passive position into its active position by being shifted transversely with respect to the axis of rotation.

## Revendications

1. Stabilisateur antiroulis pour le châssis d'un véhicule automobile, comprenant un actionneur (3) disposé entre des moitiés de stabilisateur (1, 2) et les faisant tourner au besoin l'une par rapport à l'autre autour d'un axe de rotation, l'actionneur (3) étant pourvu d'un dispositif à sécurité intégrée (34) qui relie de manière solidaire en rotation l'une à l'autre au besoin les deux moitiés de stabilisateur (1, 2), une partie d'actionneur (46) étant raccordée de manière solidaire en rotation à une moitié de stabilisateur (1) et une autre partie d'actionneur (45) étant raccordée de manière solidaire en rotation à l'autre moitié de stabilisateur (2), le dispositif à sécurité intégrée (34) étant disposé de manière efficace entre les deux parties d'actionneur (45, 46), **caractérisé en ce que** le dispositif à sécurité intégrée (34) présente un mécanisme de verrouillage (34a), qui verrouille, en mode de sécurité intégrée, les deux parties d'actionneur (45, 46) l'une à l'autre, le mécanisme de verrouillage (34a) présentant un verrou de blocage (36) qui, dans une position passive, est hors d'engagement avec les deux parties d'actionneur (45, 46), et dans une position active, est engagé avec les deux parties d'actionneur (45, 46), le verrou de blocage (36) étant maintenu dans sa position passive par une force électromagnétique.

2. Stabilisateur antiroulis selon la revendication 1, dans lequel au moins l'une des deux parties d'actionneur (46) est pourvue d'un cliquet (43, 44) pour l'engagement du verrou de blocage (36).

3. Stabilisateur antiroulis selon la revendication 1, dans lequel le verrou de blocage (36) peut être enfoncé par ressort depuis sa position passive au moyen d'une force de ressort d'un accumulateur à ressort précontraint (39) dans sa position active.

4. Stabilisateur antiroulis selon la revendication 1, dans lequel l'actionneur (3) présente deux parties d'actionneur (45, 46) disposées l'une dans l'autre, qui peuvent tourner l'une par rapport à l'autre autour d'un axe de rotation commun, le verrou de blocage (36) étant disposé transversalement à l'axe de rotation et pouvant être amené de sa position passive dans sa position active par décalage transversalement à l'axe de rotation.
